# EUROPEAN PATENT SPECIFICATION

(11) **EP 2 829 114 B1**
(45) Date of publication and mention of the grant of the patent: **02.01.2019**
(21) Application number: 13722051.3
(22) Date of filing: 18.03.2013
(51) Int. Cl.: H04W 36/04, H04W 36/00, H04W 36/22, H04W 36/32, H04W 48/16, H04W 52/02, H04W 84/10

(54) **METHOD AND APPARATUS FOR DISCOVERING SMALL CELLS IN A HETEROGENEOUS COMMUNICATION NETWORK**
VERFAHREN UND VORRICHTUNG ZUR ERMITTELUNG VON KLEINEN ZELLEN IN EINEM HETEROGENEN KOMMUNIKATIONSNETZ
PROCÉDÉ ET APPAREIL POUR DÉCOUVRIR DES PETITES CELLULES DANS UN RÉSEAU DE COMMUNICATION HÉTÉROGÈNE

(30) Priority: 19.03.2012 CN 201210073195
(43) Date of publication of application: 28.01.2015
(73) Proprietor: Alcatel Lucent, 91620 Nozay (FR)
(72) Inventor: ZHONG, Chongxian, 201206 Shanghai (CN); WEN, Pingping, 201206 Shanghai (CN); YANG, Tao, 201206 Shanghai (CN)
(74) Representative: Nokia EPO representatives
(86) International application number: PCT/IB2013/000600
(87) International publication number: WO 2013/140243

(56) References cited:
- ERICSSON ET AL: "Detection of small cells in HetNets", 3GPP DRAFT; R2-120467 DETECTION OF SMALL CELLS IN HETNETS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565403, [retrieved on 2012-01-31]
- NOKIA SIEMENS NETWORKS ET AL: "Enhancements for Small Cell Detection", 3GPP DRAFT; R2-120523_SMALL CELL DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565426, [retrieved on 2012-01-31]
- NTT DOCOMO ET AL: "Inter-frequency Pico cell measurements for Hetnet deployments", 3GPP TSG-RAN WG2 #76, 14TH - 18TH NOVEMBER 2011, SAN FRANCISCO, USA, , vol. R2-115745, no. 76 14 November 2011 (2011-11-14), pages 1-4, XP002668232, Retrieved from the Internet: URL:http://www.3gpp.org/ftp/tsg_ran/WG2_RL 2/TSGR2_76/Docs/R2-115745.zip [retrieved on 2012-01-26]
- ALCATEL-LUCENT ET AL: "On UE-speed-based methods for improving the mobility performance in HetNet", 3RD GENERATION PARTNERSHIP PROJECT (3GPP); TECHNICALSPECIFICATION GROUP (TSG) RADIO ACCESS NETWORK (RAN); WORKINGGROUP 2 (WG2)#77, XX, XX , no. R2-120652 6 February 2012 (2012-02-06), pages 1-6, XP002670658, Retrieved from the Internet: URL:http://www.3gpp.org/FTP/tsg_ran/WG2_RL 2/TSGR2_77/Docs/R2-120652.zip [retrieved on 2012-02-29]
- NOKIA SIEMENS NETWORKS: "Load Balancing on X2", 3GPP DRAFT; R3-080404, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080208, 8 February 2008 (2008-02-08), XP050163606, [retrieved on 2008-02-08]
- VODAFONE: "Small Cell Discovery for Traffic Offloading", 3GPP DRAFT; R2-114009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 15 August 2011 (2011-08-15), XP050539685, [retrieved on 2011-08-15]
- ALCATEL-LUCENT SHANGHAI BELL ET AL: "Network-Assisted Inter-frequency Pico Cell Discovery in LTE HetNets", 3GPP DRAFT; R2-121709 ON NETWORK-ASSISTED INTER-FREQUENCY PICO CELL DISCOVERY IN LTE HETNETS_R3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju Island, Korea; 20120326 - 20120330, 20 March 2012 (2012-03-20), XP050606413, [retrieved on 2012-03-20]

## Description

### Field of the invention

The present disclosure relates to a heterogonous communication network (HetNet) and particularly to a method and apparatus for discovering a small cell in a heterogonous communication network.

### Background of the invention

An existing solution to discovering/identifying a cell for a Closed Subscriber Group (CSG, abbreviated in the following as CGS) is achieved based on an Autonomous Search Function (ASF) and a proximity indication mechanism, with one of its important goals being for reduced power consumption of a user equipment. In this solution, a white list stored at the user equipment side includes cell IDs of a limited number of CGS cells associated therewith. Moreover the user equipment has information stored therein about the limited number of CGS cells associated therewith, e.g., location range information, radio fingerprint information, etc. The user equipment judges whether it has approached to one or more of the CGS cells in its white list according to the stored location range information of the limited number of CGS cells associated therewith, estimated location information of the user equipment, etc., and if so, then a search is triggered to search periodically for all the CGS cells in the white list. During the search, the user equipment determines the cell with the strongest measured signal strength in the white list as a target CGS cell and transmits a proximity indication to a macro base station to trigger the macro base station to prepare for a handover, where the proximity indication includes a cell ID of the target CGS cell.

The existing method of discovering/identifying a CGS cell is based upon the fact that a user equipment is associated only with a limited number of CGS cells. Thus the user equipment can memorize information regarding the CGS cells associated therewith, e.g., location information, radio fingerprint, etc. However due to a large number of public pico cells, it may be impossible for the user equipment to store information regarding all these public pico cells, so the existing solution to discovering a CGS cell may not be applicable to discovering/identifying a public pico cell.

At present a public pico cell is discovered/identified simply in an exhaustive search, thus resulting in considerable power consumption of the user equipment.

Thus there is a need to provide a solution capable of addressing this technical problem.

In Chinese Patent Application No. 201111 190014.0 filed on July 7, 2011 and late-published as CN 102869053 A on January 9, 2013, the applicant of the invention proposed a solution to discovering/identifying a small cell in a heterogonous communication network, where a macro base station judges whether a user equipment has approached to one or more specific small cells according to location range information of respective small cells in a macro cell and estimated position information of the user equipment, and if so, then the macro base station transmits a dedicated signaling to the user equipment, and the user equipment triggers a search based upon the dedicated signaling to search periodically for the one or more small cells. This solution can discover/identify a small cell in a heterogonous communication network more efficiently while saving power consumption of the user equipment.

In addition to the foregoing problem of considerable power consumption, the existing solution to discovering a CSG cell makes use of an s-measurement criterion based upon Reference Signal Receiving Power (RSRP), but this criterion is not sufficient to discover pico cells located in proximity to a base station of a serving macro cell because RSRP of the serving macro cell is still sufficiently high even if the user equipment is very close these pico cells.

Moreover with a solution based upon Reference Signal Received Quality (RSRP), a pico cell can be discovered with inter-cell interference, but this solution is only applicable to discovering an intra-frequency pico cell but not sufficient to discover an inter-frequency pico cell because the inter-frequency pico cell will not bring inter-cell interference to a macro cell.

Furthermore the user equipment has to perform an inter-frequency measurement to discover/identify an inter-frequency pico cell, and power consumption required for the inter-frequency measurement is more than that of intra-frequency measurement due to a limited interval configured for the inter-frequency measurement.

3GPP R2-120467 discloses detection of small cells in HetNets wherein the macro eNB enables UE generating the most traffic to discover small cells as soon as possible by readjusting their S-measure based on the small cell density and configuring them with measurement gaps.

3GPP R2-120523 discloses small cell detection wherein a new measurement gap pattern is adopted for low-effort background inter-frequency measurements.

### Summary of the invention

In view of the these problems, the invention provides a solution to discover a small cell in a heterogonous communication network.

The solution to discover a small cell according to the invention is applicable to discovering an intra-frequency small cell but also applicable to discovering an inter-frequency small cell.

It shall be noted that the small cell in this context includes but will not be limited to a pico cell and a femto cell.

According to an aspect of the invention, there is provided a method, in a macro base station of a macro cell of a heterogeneous communication network, of assisting a user equipment in discovering small cells. The method comprises the steps of: B. judging whether the user equipment has approached to a target region that includes one or more candidate small cells based upon stored location range information of all candidate small cells in the macro cell and estimated position information of the user equipment; C. judging based upon a result of the judgment in the step B whether to instruct the user equipment to perform a periodical measurement on the one or more candidate small cells in the target region to discover small cells; and D. when a result of the judgment in the step C is to instruct the user equipment to perform the periodical measurement, performing the steps of: D1. obtaining density information that indicates a density of the candidate small cells in the target region; D2. determining an interval for the periodical measurement of the user equipment based upon the obtained density information; and D3. transmitting a first signaling to the user equipment to instruct the user equipment to perform the periodical measurement, wherein the first signaling includes cell identifiers of the one or more candidate small cells in the target region and the determined interval.

The interval for the measurement can be configured more reasonably by determining the interval for the measurement correspondingly according to the density of the small cells. In the case of a lower density of the small cells, power consumption of the user equipment can be lowered by reducing an unnecessary and too frequent measurement to thereby prolong the battery life of the user equipment. In the case of a higher density of the small cells, the frequency of the measurement can be increased to discover a small cell more effectively.

In an embodiment of the invention, in the step D2, the determined interval is shorter when the density information indicates that the density of the candidate small cells in the target region is higher. In other words, the interval for the measurement can be increased correspondingly when the density of the small cells is lower. In this way, in the case of a higher density of the small cells, a small cell can be discovered more effectively in a more frequent measurement; in the case of a lower density of the small cells, power consumption of the user equipment can be lowered while ensuring effective discovering of a small cell by increasing the interval for the measurement as appropriate.

According to a particular implementation of the invention, before the step B, the method further includes the step of: A1. judging whether the user equipment is located at an edge of the macro cell; and when a result of the judgment in the step A1 is that the user equipment is located at the edge of the macro cell, performing the step of: A2. determining all the candidate small cells as all small cells covered by the macro base station.

In general, small cells are arranged at the edge of the macro cell for the purpose of ensuring mobility robustness of the user equipment. When the user equipment is located at the edge of the macro cell, a Radio Link Failure (RLF) or a Handoff Failure (HOF) may arise if the user equipment fails to discover the small cells in a timely manner. Thus when the user equipment is located at the edge of the macro cell, the ability of the user equipment to discover the small cells in a timely manner can be ensured by determining all the small cells covered by the macro base station as candidate small cells, thus lowering effectively the probability of a radio link failure or a handoff failure.

Additionally when the result of the judgment in the step A1 is that the user equipment is not located at the edge of the macro cell, performing the step of: A3. judging whether traffic of the macro cell is above a first threshold; and when a result of the judgment in the step A3 is that the traffic of the macro cell is above the first threshold, performing the step of: A4. determining all the candidate small cells as all small cells that are able to offload the traffic of the macro cell among all the small cells covered by the macro base station.

Additionally the subsequent step B will not be performed when the result of the judgment in the step A3 is that the traffic of the macro cell is not above the first threshold.

In general, small cells that are not located at any edge of the macro cell are intended to offload traffic of the macro cell. For example, such small cells are typically arranged in hot spots to improve a Quality of Service (QoS) in these spots. Especially the quality of service of the user equipment can be improved significantly when it is handed over from the heavily loaded macro cell to a lightly loaded small cell. However when the macro cell is not heavily loaded, such a handover will not improve the quality of service significantly but instead incur an unnecessary cost including power consumed for the user equipment to discover the small cell, the delay and the signaling overhead resulting from the handover, etc. Furthermore if the small cell can not accept the new user equipment due to its own excessive traffic, then the small cell still can not perform the handover even if it is discovered by the user equipment. With the foregoing method, the macro base station will instruct the user equipment to perform a measurement to discover small cells only when the macro cell is heavily loaded and will determine only those small cells that are able to offload the traffic of the macro cell among all the small cells covered by the macro base station as candidate small cells. Thus unnecessary discovering of small cells by the use equipment can be alleviated or avoided to thereby lower or avoid unnecessary power consumption of the user equipment.

According to a particular implementation of the invention, the step A4 further includes the steps of: transmitting an offloading request to all the small cells covered by the macro base station to request all the small cells to report whether to be able to offload the traffic of the macro cell; receiving a corresponding offloading reply respectively from at least one small cell, the offloading reply being used to indicate that the corresponding small cell is able to offload the traffic of the macro cell, the offloading reply including an identifier of the small cell transmitting the traffic information report; and determining from the received offloading replies all small cells that are able to offload the traffic of the macro cell among all the small cells covered by the macro base station.

Additionally the offloading reply further includes traffic information of the corresponding small cell.

According to a particular implementation of the invention, when the result of the judgment in the step A3 is that the traffic of the macro cell is above the first threshold, between the steps B and C, the method further includes: obtaining mobility status information of the user equipment, the mobility status information indicating a speed of the user equipment; and judging whether to instruct the user equipment to perform the periodical measurement based upon a result of the judgment in the step B and the obtained mobility status information in the step C.

In an embodiment of the invention, it is judged not to instruct the user equipment to perform the periodical measurement when the mobility status information indicates that the speed of the user equipment is above a second threshold in the step C.

In general, the coverage area of a small cell is relatively small, and when the user equipment moves at a high speed, the user equipment is more likely to leave the coverage area of the small cell in a very short period. In view of the power consumption required for discovering the small cell, the delay and the signaling overhead required for the subsequent process, e.g., a handover, etc., the handover of the user equipment from the macro cell to the small cell in this situation may not bring benefits, for example, the frequent handover between macro cells and/or small cells may increase the probability of a handover failure. On the contrary, the macro cell can typically offer a better service to the high-speed user equipment.

According to a particular implementation of the invention, when the result of the judgment in the step A1 is that the user equipment is located at the edge of the macro cell, the method further includes: obtaining mobility status information of the user equipment, the mobility status information indicating a speed of the user equipment; and determining the interval based upon the obtained density information and the obtained mobility status information in the step D2.

In an embodiment of the invention, the determined interval is shorter when the mobility status information indicates that the speed of the user equipment is higher in the step D2.

As described above, small cells arranged at the edge of the macro cell are intended to ensure mobility robustness of the user equipment. When the user equipment is located at the edge of the macro cell, a radio link failure or a handover failure may arise if the user equipment fails to discover the small cells in a timely manner. Thus when the user equipment is located at the edge of the macro cell, the small cells can be discovered in a shorter period by configuring the high-speed user equipment with a shorter interval for the measurement to thereby ensure mobility robustness.

According to a particular implementation of the invention, the method further includes the steps of: E. receiving a second signaling from the user equipment, the second signaling including cell identifiers of the small cells discovered by the user equipment; and F. based upon the second signaling, performing one of the steps of: preparing for a handover of the user equipment to one of the discovered small cells; and taking one or more of the discovered small cells as a candidate secondary cell or cells to serve the user equipment.

After the user equipment discovers one or more small cells, the user equipment notifies, via the second signaling, the macro base station of the discovered small cell(s) by the cell identifier(s). Thereafter the macro base station can perform a corresponding operation. In an example, the macro base station decides to hand the user equipment over to one of the discovered small cell, and thus the macro base station prepares for the handover. In another example, in the case that the user equipment can be configured with a plurality of small cells, the macro base station can decide one or more of the discovered small cells as a secondary cell(s) to serve the user equipment, and thus the macro base station can take one or more of the discovered small cells as a candidate secondary cell(s) to serve the user equipment.

In an embodiment of the invention, the user equipment can feed all the discovered small cells back to the macro base station. As an alternative, the user equipment can select one or more of the small cells according to a predetermined rule and feed the small cell(s) back to the macro base station. For example, the user equipment can feed the small cell with the strongest signal strength among the discovered small cells back to the macro base station.

According to another aspect of the invention, there is provided a method, in a user equipment of a heterogeneous communication network, of discovering small cells. The method comprises the steps of: a. receiving a first signaling from a macro base station, the first signaling being used to instruct the user equipment to perform a periodical measurement on one or more candidate small cells in a target region to discover small cells, wherein the first signaling includes cell identifiers of the one or more candidate small cells in the target region and an interval for the periodical measurement determined by the macro base station based upon an obtained density information that indicates a density of the candidate small cells in the target region; b. in response to the received first signaling, performing the periodical measurement with the interval to discover small cells; and c. transmitting a second signaling to the macro base station, the second signaling including cell identifiers of the discovered small cells.

Additionally when the user equipment is configured with Discontinuous Receive (DRX), before the step b, the method further includes the step of: disabling the Discontinuous Receive configuration of the user equipment in response to the received first signaling.

The invention further provides the corresponding apparatus in addition to the method of discovering/recognizing a small cell.

The invention provides an apparatus, in a macro base station of a macro cell of a heterogeneous communication network, for assisting a user equipment in discovering small cells, the apparatus comprises:
a first judging unit configured to judge whether the user equipment has approached to a target region that includes one or more candidate small cells based upon stored location range information of all candidate small cells in the macro cell and estimated position information of the user equipment;
a second judging unit configured to judge based upon a result of the judgment of the first judging unit whether to instruct the user equipment to perform a periodical measurement on the one or more candidate small cells in the target region to discover small cells; and
a first obtaining unit configured, when a result of the judgment of the second judging unit is to instruct the user equipment to perform the periodical measurement, to obtain density information that indicates a density of the candidate small cells in the target region;
a first determining unit configured to determine an interval for the periodical measurement of the user equipment based upon the density information obtained by the first obtaining unit; and
a first transmitting unit configured to transmit a first signaling to the user equipment to instruct the user equipment to perform the periodical measurement, wherein the first signaling includes cell identifiers of the one or more candidate small cells in the target region and the determined interval.

The invention further provides an apparatus, in a user equipment of a heterogeneous communication network, for discovering small cells, the apparatus comprises:
a first receiving unit configured to receive a first signaling from a macro base station, the first signaling being used to instruct the user equipment to perform a periodical measurement on one or more candidate small cells in a target region to discover small cells, wherein the first signaling includes cell identifiers of the one or more candidate small cells in the target region and an interval for the periodical measurement determined by the macro base station based upon an obtained density information that indicates a density of the candidate small cells in the target region;
a first measuring unit configured, in response to the received first signaling, to perform the periodical measurement at the interval to discover small cells; and
a second transmitting unit configured to transmit a second signaling to the macro base station, the second signaling including cell identifiers of the discovered small cells.

The respective of the invention will become more apparent from the following description of embodiments thereof.

### Brief description of drawings

The foregoing and other features of the invention will become more apparent from the following detailed description of non-limiting embodiments given with reference to the drawings in which:
Fig.1 is a network topology diagram of a heterogonous communication network according to an embodiment of the invention;
Fig.2 illustrates a flow chart of a method of discovering a small cell in a heterogonous communication network according to an embodiment of the invention;
Fig.3 illustrates a flow chart of a method of discovering a small cell in a heterogonous communication network according to another embodiment of the invention; and
Fig.4 illustrates a flow chart of the step S114 in the method of Fig.3.

Throughout the drawings, identical or similar reference numerals denote identical or similar steps and/or components.

### Detailed description of embodiments

The invention will be described in details below with reference to the drawings.

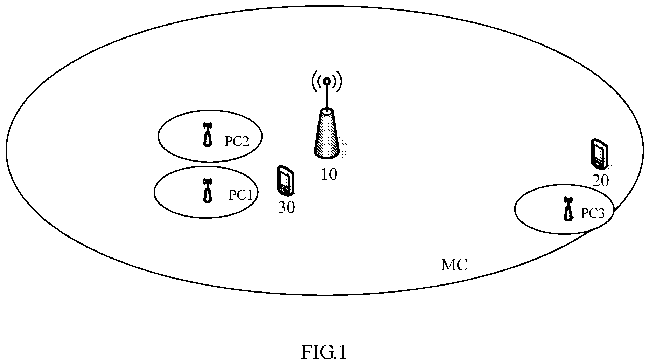

Fig.1 is a network topology diagram of a heterogonous communication network according to an embodiment of the invention. A large ellipse in the figure represents a macro cell MC, i.e., the coverage area of a macro base station (macro eNodeB) 10. A plurality of pico cells are deployed in the macro cell MC, for example, small ellipses of a pico cell PC1, a pico cell PC2 and a pico cell PC3 as illustrated in the figure. In the figure there are also illustrated a user equipment 20 and a user equipment 30 moving throughout the macro cell MC.

It shall be noted that although only three pico cells PC1, PC2 and PC3 are illustrated in the macro cell MC in Fig.1, those ordinarily skilled in the art can appreciate that the number of pico cells in the macro cell MC will not be limited to three in a practical application, and furthermore the macro cell MC may further include a plurality of femto cells. Therefore Fig.1 is merely for an illustrative purpose but will not limit the scope of the invention.

Furthermore according to the invention, the macro base station 10 stores therein cell identifiers, location range information, etc., of all the pico cells in the macro cell MC. Furthermore the macro base station 10 is capable of positioning a user equipment, that is, estimating location information of the user equipment.

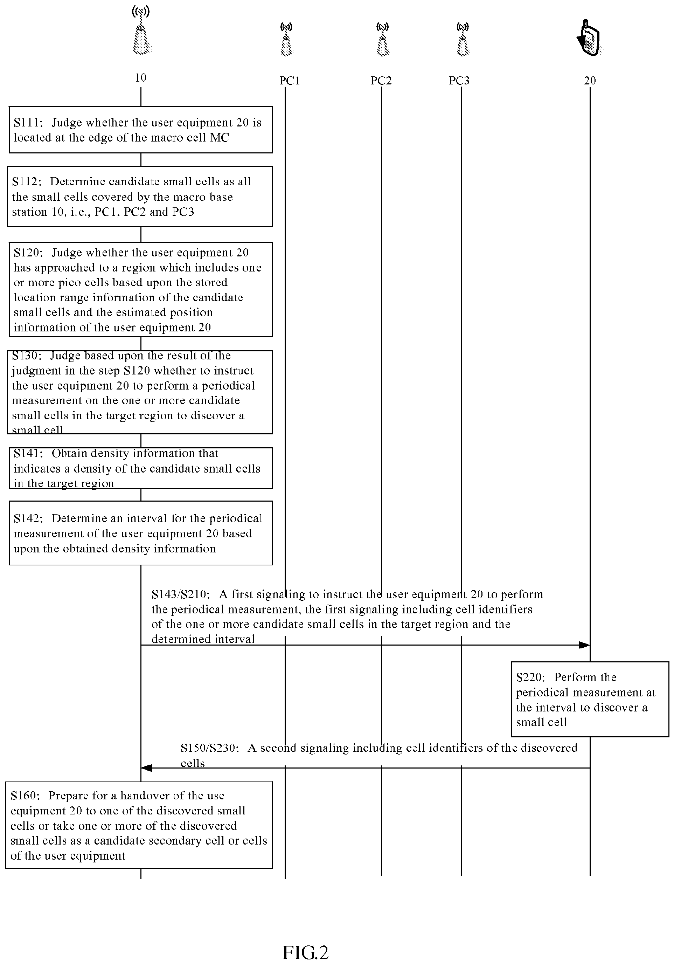

Fig.2 illustrates a flow chart of a method of discovering a small cell in a heterogonous communication network according to an embodiment of the invention. The method of assisting the user equipment 20 in discovering a small cell according to an embodiment of the invention will be described below with reference to Fig.2 together with Fig.1.

Referring to Fig.2, firstly in the step S111, the macro base station 10 judges whether the user equipment 20 is located at the edge of the macro cell MC. For example, the macro base station 10 can perform the judgment based upon estimated location information of the user equipment 20. For example, the macro base station 10 can perform the judgment periodically. In this example, the result of the judgment is that the user equipment 20 is located at the edge of the macro cell MC. Thus in the step S112, the macro base station 10 determines candidate small cells as all the small cells covered by the macro station 10, i.e., the pico cells PC1, PC2 and PC3.

Thereafter in the step S120, the macro base station 10 judges whether the user equipment 20 has approached to a region which includes one or more pico cells based upon the stored location range information of the candidate small cells in the macro cell MC, i.e., the pico cells PC1, PC2 and PC3, and the estimated position information of the user equipment 20. In this example, the result of the judgment shows that the user equipment 20 has approached to such a region, for example, the user equipment 20 has moved close to a region where the pico cell PC3 is located (as illustrated in Fig.1).

Thereafter in the step S130, the macro base station 10 judges based upon the result of the judgment in the step S120 whether to instruct the user equipment 20 to perform a periodical measurement on the one or more candidate small cells in the target region to discover a small cell. Specifically, the result of the judgment in the step S130 is to instruct the user equipment 20 to perform the periodical measurement when the result of the judgment in the step S120 is that the user equipment 20 has approached to a region which includes one or more pico cells. As described above, in this example, the result of the judgment in the step S120 shows that the user equipment 20 has moved close to the region where the pico cell PC3 is located, so the result of the judgment in the step S130 is to instruct the user equipment 20 to perform the periodical measurement, and then the macro base station 10 performs the subsequent steps.

In the step S141, the macro base station 10 obtains density information that indicates the density of the candidate small cells in the target region, and in the step S142, the macro base station 10 determines an interval for the periodical measurement of the user equipment 20 based upon the obtained density information. Specifically the determined interval is shorter when the density information indicates that the density of the candidate small cells in the target region is higher. For example, the interval for the measurement is set as performing a measurement of 6ms every 40ms when the density of the candidate small cells in the target region is higher; and the interval for the measurement is set as performing a measurement of 6ms every 80ms when the density of the candidate small cells in the target region is lower. For example, whether the density is higher or lower can be judged based upon a predetermined threshold.

Additionally in addition to the density information, the macro base station 10 can further obtain mobility status information of the user equipment 20 which indicates the speed of the user equipment, and determine the interval based upon the obtained density information and the obtained mobility status information. Specifically the determined interval is shorter when the mobility status information indicates a higher speed of the user equipment. For example, the interval for the measurement is set as performing a measurement of 6ms every 80ms when the user equipment moves at a low or moderate speed; and the interval for the measurement is set as performing a measurement of 6ms every 40ms when the user equipment moves at a high speed. For example, whether the user equipment moves at a high speed can be judged based upon a predetermined threshold.

Still referring to Fig.2, in the step S143, the macro base station 10 transmits a first signaling to the user equipment 20 to instruct the user equipment 20 to perform the periodical measurement on the one or more candidate small cells (in this example, the pico cell PC3) in the target region, wherein the first signaling includes cell identifiers of the one or more candidate small cells in the target region (in this example, the cell identifier of the pico cell PC3) and the interval determined in the step S142.

Correspondingly in the step S210, the user equipment 20 receives the first signaling, and in the step S220, in response to the received first signaling, the user equipment 20 performs the periodical measurement on the small cell or cells indicated therein (in this example, the pico cell PC3) at the interval indicated therein to discover a small cell. Assumed in this example the user equipment 20 discovers the pico cell PC3.

Additionally when the user equipment 20 is configured with Discontinuous Receive (DRX), before the step S220, the user equipment 20 disables the Discontinuous Receive configuration in response to the received first signaling to thereby perform the periodical measurement in the subsequent step S220.

Thereafter in the step S230, the user equipment 20 transmits a second signaling to the macro base station MC, the second signaling including cell identifiers of the discovered small cells.

Correspondingly in the step S150, the macro base station 10 receives the second signaling from the user equipment 20, and in the step S160, the macro base station 10 performs a corresponding operation in response to the received second signaling. In an example, the macro base station 10 prepares for a handover of the use equipment 20 to one of the discovered small cells (e.g., the pico cell PC3). In another example, the macro base station 10 takes one or more of the discovered small cells (e.g., the pico cell PC3) as a candidate secondary cell or cells of the user equipment.

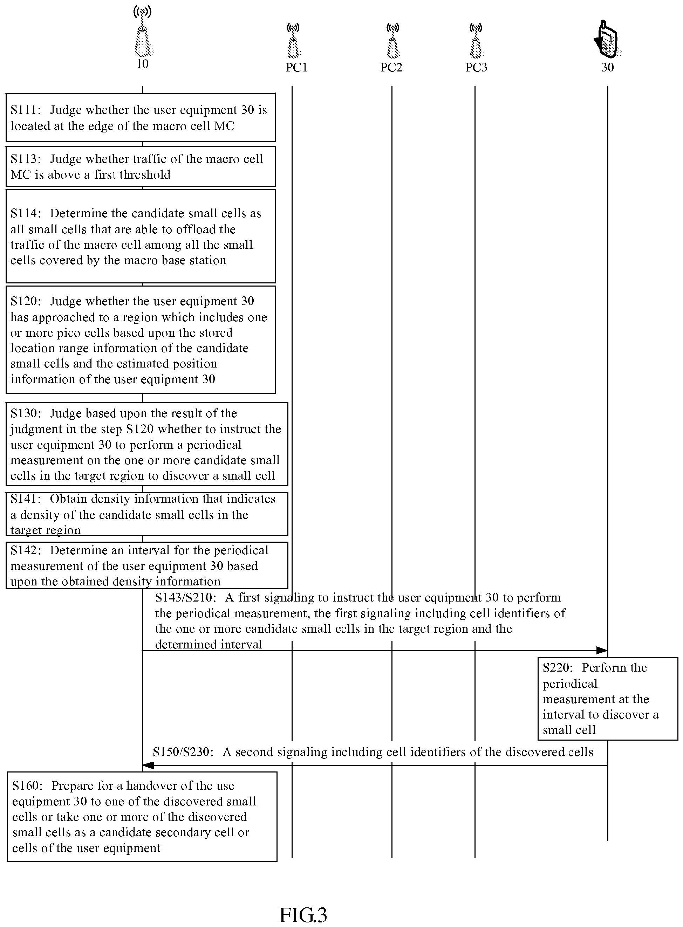

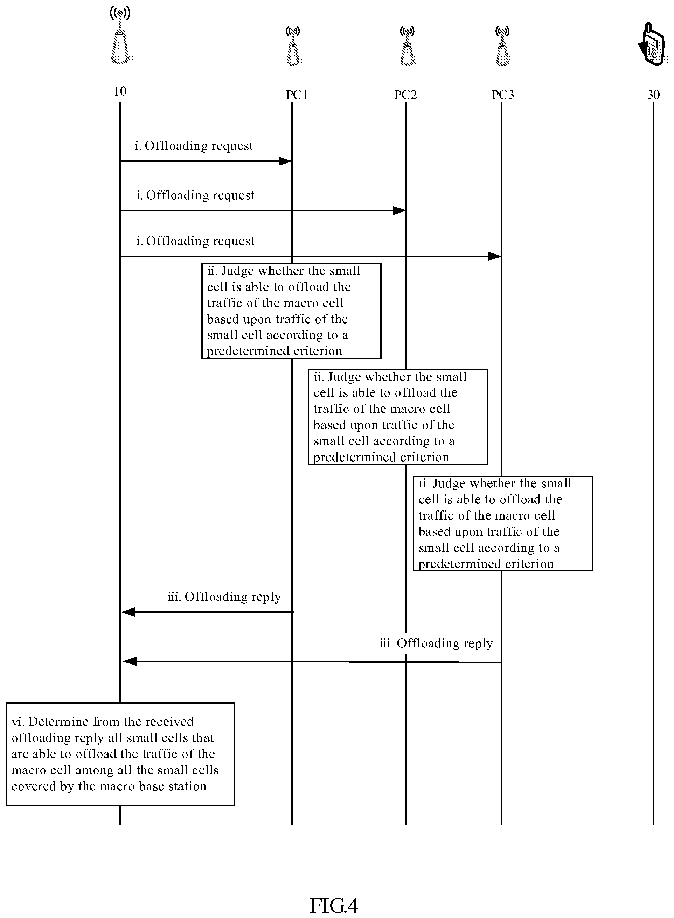

Fig.3 illustrates a flow chart of a method of discovering a small cell in a heterogonous communication network according to another embodiment of the invention. Fig.4 illustrates a flow chart of the step S114 in the method of Fig.3. The method of assisting the user equipment 30 in discovering a small cell according to an embodiment of the invention will be described below with reference to Fig.3 and Fig.4 together with Fig.1.

Referring to Fig.3, firstly in the step S111, the macro base station 10 judges whether the user equipment 30 is located at the edge of the macro cell MC. The step is similar to the step S111 in Fig.2, so a repeated description thereof will be omitted here. In this example, the result of the judgment is that the user equipment 30 is not located at the edge of the macro cell MC. Thus the macro base station 10 performs the step S113.

In the step S113, the macro base station 10 judges whether traffic of the macro cell MC is above a first threshold. In this example, the result of the judgment is that the traffic of the macro cell MC is above the first threshold. In other words, the traffic of the macro cell MC shall be offloaded. Thus the macro base station 10 performs the step S114. Additionally the macro base station 10 will not perform any subsequent step if the result of the judgment is that the traffic of the macro cell MC is not above the first threshold.

In the step S114, the macro base station 10 determines the candidate small cells as small cells that are able to offload the traffic of the macro cell among all the small cells covered by the macro base station 10. Assumed in this example the small cells that are able to offload the traffic of the macro cell among all the small cells covered by the macro base station 10 are the pico cells PC1 and PC3.

According to an embodiment of the invention, the macro base station 10 can determine small cells that are able to offload the traffic of the macro cell among all the small cells covered by the macro base station 10 according to the flow illustrated in Fig.4.

Referring to Fig.4, firstly the macro base station 10 transmits an offloading request to all the small cells covered by the macro base station 10, i.e., the pico cells PC1, PC2 and PC3, to request all the small cells to report whether to be able to offload the traffic of the macro cell MC (as illustrated in the step i). For example, the macro base station 10 can transmit the offloading request in a broadcast manner.

Once a small cell receives the offloading request from the macro base station 10, the base station of the small cell judges whether the small cell is able to offload the traffic of the macro cell based upon traffic of the small cell according to a predetermined criterion (as illustrated in the step ii). In an example, the predetermined criterion is to judge the small cell is able to offload the traffic of the macro cell if the traffic of the small cell is below a predetermined threshold.

After the base station of the small cell performs the foregoing judgment, if the result of the judgment shows that the small cell is able to offload the traffic of the macro cell, then the base station of the small cell transmits an offloading reply to the macro base station to indicate that the small cell is able to offload the traffic of the macro cell, the offloading reply including the cell identifier of the small cell (as illustrated in the step iii). Additionally the offloading reply can further include the traffic of the corresponding small cell. Assumed in this example the pico cells PC1 and PC3 are able to offload the traffic of the macro cell MC, so in the step iii, the pico cells PC1 and PC3 transmit an offloading reply to the macro base station 10 respectively.

As an alterative, the base station of each small cell receiving the offloading request will transmit a corresponding offloading reply to indicate whether the small cell is able to offload the traffic of the macro cell.

Next as illustrated in the step iv, in response to reception of the corresponding offloading reply respectively from at least one small cells, the macro base station 10 determines from the received offloading reply all small cells that are able to offload the traffic of the macro cell among all the small cells covered by the macro base station.

The foregoing interaction of the offloading request and/or the offloading reply between the macro base station and the small cell can be performed in numerous ways. In an example, an X2 interface is defined between the macro base station and the pico cell according to the existing standard, so the interaction of the offloading request and/or the offloading reply can be performed between the macro base station and the small cell via the X2 interface. Those skilled in the art can appreciate that any interface between the macro base station and the small cell can be applicable to the offloading request and/or the offloading reply.

Still referring to Fig.3, the macro base station 10 performs the step S120 subsequent to the step S114. In the step S120, the macro base station 10 judges whether the user equipment 30 has approached to a region which includes one or more pico cells based upon the stored location range information of the candidate small cells in the macro cell MC (in this example, the pico cells PC1, PC2 and PC3) and the estimated position information of the user equipment 30. In this example, the result of the judgment shows that the user equipment 30 has approached to such a region, for example, the user equipment has moved close to a region where the pico cell PC1 is located (as illustrated in Fig.1).

Thereafter in the step S130, the macro base station 10 judges based upon the result of the judgment in the step S120 whether to instruct the user equipment 30 to perform a periodical measurement on the one or more candidate small cells in the target region to discover a small cell. Specifically, the result of the judgment in the step S130 is to instruct the user equipment 30 to perform the periodical measurement when the result of the judgment in the step S120 is that the user equipment 30 has approached to a region which includes one or more pico cells. As described above, in this example, the result of the judgment in the step S120 shows that the user equipment 30 has moved close to the region where the pico cell PC1 is located, so the result of the judgment in the step S130 is to instruct the user equipment 30 to perform the periodical measurement, and then the macro base station 10 performs subsequent steps.

As an alternative, before the step S130, the macro base station 10 can further obtain mobility status information of the user equipment 30 which indicates the speed of the user equipment, and in the step S130, judges whether to instruct the user equipment 30 to perform the periodical measurement on the one or more candidate small cells in the target region to discover a small cell based upon the result of the judgment in the step S120 and the obtained mobility status information. Specifically, when the result of the judgment in the step S120 is that the user equipment 30 has approached to a region including one or more small cells and the obtained mobility status information indicates a low speed of the user equipment 30 (for example, moving at a low or moderate speed), the macro base station 10 judges to instruct the user equipment 30 to perform the foregoing periodical measurement; otherwise, the macro base station 10 judges not to instruct the user equipment 30 to perform the foregoing periodical measurement and thus will not perform any subsequent steps. Assumed in this example the result of the judgment in the step S120 shows that the user equipment 30 has moved close to the region where the pico cell PC1 is located and the obtained mobility status information indicates that the user equipment 30 moves at a low or moderate speed, so the result of the judgment in the step S130 is to instruct the user equipment 30 to perform the foregoing periodical measurement, and thus the macro base station 10 performs a subsequent step.

In the step S141, the macro base station 10 obtains density information that indicates the density of the candidate small cells in the target region, and in the step S142, the macro base station 10 determines the interval for the periodical measurement of the user equipment 30 based upon the obtained density information. Specifically the determined interval is shorter when the density information indicates that the density of the candidate small cells in the target region is higher. For example, the interval for the measurement is set as performing a measurement of 6ms every 40ms when the density of the candidate small cells in the target region is higher; and the interval for the measurement is set as performing a measurement of 6ms every 80ms when the density of the candidate small cells in the target region is lower. For example, whether the density is higher or lower can be judged based upon a predetermined threshold.

Still referring to Fig.3, in the step S143, the macro base station 10 transmits a first signaling to the user equipment 30 to instruct the user equipment 30 to perform the periodical measurement on the one or more candidate small cells in the target region (in this example, the pico cell PC1), wherein the first signaling includes cell identifiers of the one or more candidate small cells in the target region (in this example, the cell identifier of the pico cell PC1) and the interval determined in the step S142.

Correspondingly in the step S210, the user equipment 30 receives the first signaling, and in the step S220, in response to the received first signaling, the user equipment 30 performs the periodical measurement on the small cell or cells indicated therein ((in this example, the pico cell PC1) at the interval indicated therein to discover a small cell. Assumed in this example the user equipment 30 discovers the pico cell PC1.

Additionally when the user equipment 30 is configured with Discontinuous Receive (DRX), before the step S220, the user equipment disables the Discontinuous Receive configuration in response to the received first signaling to thereby perform the periodical measurement in the subsequent step S220.

Thereafter in the step S230, the user equipment 30 transmits a second signaling to the macro base station MC, the second signaling including cell identifiers of the discovered small cells.

Correspondingly in the step S150, the macro base station 10 receives the second signaling from the user equipment 30, and in the step S160, the macro base station 10 performs a corresponding operation in response to the received second signaling. In an example, the macro base station 10 prepares for a handover of the use equipment 30 to one of the discovered small cells (e.g., the pico cell PC1). In another example, the macro base station 10 takes one or more of the discovered small cells (e.g., the pico cell PC1) as a candidate secondary cell or cells of the user equipment.

It will be apparent to those skilled in the art shall appreciate that the invention will not be limited to the details of the foregoing exemplary embodiments and the invention can be embodied in other specific forms without departing from the scope of the appended claims. Therefore the embodiments shall be construed to be illustrated but not limiting in any respect, and any reference numerals in the claims shall not be construed as limiting the claims in question. Furthermore it will be apparent that the term "comprising" will not preclude another element(s) or step(s), and the term "a" or "an" preceding an element will not preclude presence of "a plural of" such elements. A plurality of elements stated in a product claim can also be embodied in software or hardware as an element. The terms "first", "second", etc., are intended to represent a name but not to suggest any specific order.

## Claims

1. A method, in a macro base station (10) of a macro cell (MC) of a heterogeneous communication network, of assisting a user equipment (20, 30) in discovering small cells (PC1, PC2, PC3), the method comprising the steps of:
B. judging (S120) whether the user equipment (20, 30) has approached to a target region that includes one or more candidate small cells (PC1, PC2, PC3) based upon stored location range information of all candidate small cells (PC1, PC2, PC3) in the macro cell (MC) and estimated position information of the user equipment (20, 30);
C. judging (S130) based upon a result of the judgment in the step B whether to instruct the user equipment (20, 30) to perform a periodical measurement on the one or more candidate small cells (PC1, PC2, PC3) in the target region to discover small cells (PC1, PC2, PC3); and
D. when a result of the judgment in the step C is to instruct the user equipment (20, 30) to perform the periodical measurement, performing the steps of:
D1. obtaining (S141) density information that indicates a density of the candidate small cells (PC1, PC2, PC3) in the target region;
D2. determining (S142) an interval for the periodical measurement of the user equipment (20, 30) based upon the obtained density information; and
D3. transmitting (S143) a first signaling to the user equipment (20, 30) to instruct the user equipment (20, 30) to perform the periodical measurement, wherein the first signaling includes cell identifiers of the one or more candidate small cells (PC1, PC2, PC3) in the target region and the determined interval.

2. The method according to claim 1, wherein in the step D2, the determined interval is shorter when the density information indicates that the density of the candidate small cells (PC1, PC2, PC3) in the target region is higher.

3. The method according to claim 1, wherein before the step B, the method further comprises the step of:
A 1. judging (S111) whether the user equipment (20, 30) is located at an edge of the macro cell (MC); and
when a result of the judgment in the step A1 is that the user equipment (20, 30) is located at the edge of the macro cell (MC), performing the step of:
A2. determining (S112) all the candidate small cells (PC1, PC2, PC3) as all small cells covered by the macro base station (10).

4. The method according to claim 3, wherein when the result of the judgment in the step A1 is that the user equipment (20, 30) is not located at the edge of the macro cell (MC), performing the step of:
A3. judging whether traffic of the macro cell (MC) is above a first threshold; and
when a result of the judgment in the step A3 is that the traffic of the macro cell (MC) is above the first threshold, performing the step of:
A4. determining all the candidate small cells (PC1, PC2, PC3) as all small cells (PC1, PC2, PC3) that are able to offload the traffic of the macro cell (MC) among all the small cells (PC1, PC2, PC3) covered by the macro base station (10).

5. The method according to claim 4, wherein the step A4 further comprises the steps of:
- transmitting (i) an offloading request to all the small cells (PC1, PC2, PC3) covered by the macro base station (10) to request all the small cells (PC1, PC2, PC3) to report whether to be able to
offload the traffic of the macro cell (MC);
- receiving (iii) a corresponding offloading reply respectively from at least one small cell (PC1, PC2, PC3), the offloading reply being used to indicate that the corresponding small cell (PC1, PC2, PC3) is able to offload the traffic of the macro cell (MC), the
offloading reply (iii) including an identifier of the small cell transmitting the traffic information report; and
- determining from the received offloading replies (iii) all small cells (PC1, PC2, PC3) that are able to offload the traffic of the macro cell (MC) among all the small cells
(PC1, PC2, PC3) covered by the macro base station (10).

6. The method according to claim 4, wherein when the result of the judgment in the step A3 is that the traffic of the macro cell (MC) is above the first threshold,
- between the steps B and C, the method further comprises: obtaining mobility status information of the user equipment (20, 30), the mobility status information indicating a speed of the user equipment (20, 30); and
- judging whether to instruct the user equipment (20, 30) to perform the periodical measurement based upon a result of the judgment in the step B and the obtained mobility status information in the step C.

7. The method according to claim 6, wherein it is judged not to instruct the user equipment (20, 30) to perform the periodical measurement when the mobility status information indicates that the speed of the user equipment (20, 30) is above a second threshold in the step C.

8. The method according to claim 3, wherein when the result of the judgment in the step A1 is that the user equipment (20, 30) is located at the edge of the macro cell (MC),
- the method further comprises: obtaining mobility status information of the user equipment (20, 30), the mobility status information indicating a speed of the user equipment (20, 30); and
- determining the interval based upon the obtained density information and the obtained mobility status information in the step D2.

9. The method according to claim 8, wherein the determined interval is shorter when the mobility status information indicates that the speed of the user equipment (20, 30) is higher in the step D2.

10. The method according to claim 1, further comprising:
E. receiving (S150) a second signaling from the user equipment, the second signaling including cell identifiers of the small cells (PC1, PC2, PC3) discovered by the user equipment (20, 30); and
F. based upon the second signaling, performing one of the steps of:
- preparing (S160) for a handover of the user equipment (20, 30) to one of the discovered small cells (PC1, PC2, PC3); and
- taking one or more of the discovered small cells (PC1, PC2, PC3) as a candidate secondary cell or cells to serve the user equipment (20, 30).

11. A method, in a user equipment (20, 30) of a heterogeneous communication network, of discovering small cells (PC1, PC2, PC3), the method comprising the steps of:
a. receiving (S210) a first signaling from a macro base station (10), the first signaling being used to instruct the user equipment (20, 30) to perform (S220) a periodical measurement on one or more candidate small cells (PC1, PC2, PC3) in a target region to discover small cells (PC1, PC2, PC3), wherein the first signaling includes cell identifiers of the one or more candidate small cells (PC1, PC2, PC3) in the target region and an interval for the periodical measurement determined by the macro base station based upon an obtained density information that indicates a density of the candidate small cells in the target region;
b. in response to the received first signaling, performing (S220) the periodical measurement with the interval to discover small cells (PC1, PC2, PC3); and
c. transmitting (S230) a second signaling to the macro base station (10), the second signaling including cell identifiers of the discovered small cells (PC1, PC2, PC3).

12. An apparatus, in a macro base station (10) of a macro cell (MC) of a heterogeneous communication network, for assisting a user equipment (20, 30) in discovering small cells (PC1, PC2, PC3), the apparatus comprising:
a first judging unit configured to judge whether the user equipment (20, 30) has approached to a target region that includes one or more candidate small cells (PC1, PC2, PC3) based upon stored location range information of all candidate small cells in the macro cell and estimated position information of the user equipment (20, 30);
a second judging unit configured to judge based upon a result of the judgment of the first judging unit whether to instruct the user equipment (20, 30) to perform a periodical measurement on the one or more candidate small cells (PC1, PC2, PC3) in the target region to discover small cells (PC1, PC2, PC3); and
a first obtaining unit configured, when a result of the judgment of the second judging unit is to instruct the user equipment (20, 30) to perform the periodical measurement, to obtain density information that indicates a density of the candidate small cells (PC1, PC2, PC3) in the target region;
a first determining unit configured to determine an interval for the periodical measurement of the user equipment (20, 30) based upon the density information obtained by the first obtaining unit; and
a first transmitting unit configured to transmit (S143, S210) a first signaling to the user equipment (20, 30) to instruct the user equipment to perform the periodical measurement, wherein the first signaling includes cell identifiers of the one or more candidate small cells (PC1, PC2, PC3) in the target region and the determined interval.

13. An apparatus, in a user equipment (20, 30) of a heterogeneous communication network, for discovering small cells (PC1, PC2, PC3), the apparatus comprising:
a first receiving unit configured to receive (S210) a first signaling from a macro base station (10), the first signaling being used to instruct the user equipment (20, 30) to perform a periodical measurement on one or more candidate small cells (PC1, PC2, PC3) in a target region to discover small cells (PC1, PC2, PC3), wherein the first signaling includes cell identifiers of the one or more candidate small cells (PC1, PC2, PC3) in the target region and an interval for the periodical measurement determined by the macro base station based upon an obtained density information that indicates a density of the candidate small cells in the target region;
a first measuring unit configured, in response to the received first signaling, to perform (S220) the periodical measurement at the interval to discover small cells; and
a second transmitting unit configured to transmit (S230) a second signaling to the macro base station (10), the second signaling including cell identifiers of the discovered small cells (PC1, PC2, PC3).

## Patentansprüche

1. Verfahren, in einer Makrobasisstation (10) einer Makrozelle (MC, macro cell) eines heterogenen Kommunikationsnetzes, zum Unterstützen eines Benutzergeräts (20, 30) bei der Ermittelung kleiner Zellen (PC1, PC2, PC3), wobei das Verfahren die folgenden Schritte umfasst:
B. Beurteilen (S120), ob sich das Benutzergerät (20, 30) einer Zielregion angenähert hat, die einen oder mehrere Kandidaten für kleine Zellen (PC1, PC2, PC3) umfasst, basierend auf gespeicherten Ortsreichweiteninformation aller Kandidaten für kleine Zellen (PC1, PC2, PC3) in der Makrozelle (MC) und geschätzten Positionsinformationen des Benutzergeräts (20, 30);
C. Beurteilen (S130), basierend auf einem Ergebnis der Beurteilung in Schritt B, ob das Benutzergerät (20, 30) angewiesen werden soll, eine periodische Messung auf dem einen oder den mehreren Kandidaten für kleine Zellen (PC1, PC2, PC3) in der Zielregion durchzuführen, um kleine Zellen (PC1, PC2, PC3) zu ermitteln; und
D. wenn ein Ergebnis der Beurteilung in Schritt C ist, das Benutzergerät (20, 30) anzuweisen, die periodische Messung durchzuführen, Durchführen der folgenden Schritte:
D1. Abrufen (S141) von Dichteinformationen, die eine Dichte der Kandidaten für kleine Zellen (PC1, PC2, PC3) in der Zielregion anzeigen;
D2. Bestimmen (S142) eines Intervalls für die periodische Messung des Benutzergeräts (20, 30) basierend auf den abgerufenen Dichteinformationen; und
D3. Übertragen (S143) einer ersten Signalisierung an das Benutzergerät (20, 30), um das Benutzergerät (20, 30) anzuweisen, die periodische Messung durchzuführen, wobei die erste Signalisierung Zellkennungen des einen oder der mehreren Kandidaten für kleine Zellen (PC1, PC2, PC3) in der Zielregion und das bestimmte Intervall umfasst.

2. Verfahren nach Anspruch 1, wobei bei Schritt D2 das bestimmte Intervall kürzer ist, wenn die Dichteinformationen anzeigen, dass die Dichte der Kandidaten für kleine Zellen (PC1, PC2, PC3) in der Zielregion höher ist.

3. Verfahren nach Anspruch 1, wobei vor dem Schritt B das Verfahren ferner den folgenden Schritt umfasst:
A1. Beurteilen (S111), ob das Benutzergerät (20, 30) an einem Rand der Makrozelle (MC) befindlich ist;
und wenn ein Ergebnis der Beurteilung im Schritt A1 ist, dass das Benutzergerät (20, 30) am Rand der Makrozelle (MC) befindlich ist, Durchführen des folgenden Schritts:
A2. Bestimmen (S112) aller Kandidaten für kleine Zellen (PC1, PC2, PC3) als alle kleinen Zellen, die durch die Makrobasisstation (10) abgedeckt sind.

4. Verfahren nach Anspruch 3, wobei, wenn das Ergebnis der Beurteilung im Schritt A1 ist, dass das Benutzergerät (20, 30) nicht am Rand der Makrozelle (MC) befindlich ist, der folgende Schritt durchgeführt wird:
A3. Beurteilen, ob Verkehr der Makrozelle (MC) über einer ersten Schwelle liegt; und
wenn ein Ergebnis der Beurteilung im Schritt A3 ist, dass der Verkehr der Makrozelle (MC) über der ersten Schwelle liegt, Durchführen des folgenden Schritts:
A4. Bestimmen aller Kandidaten für kleine Zellen (PC1, PC2, PC3) als alle kleinen Zellen (PC1, PC2, PC3), die in der Lage sind, den Verkehr der Makrozelle (MC) abzuladen, unter allen kleinen Zellen (PC1, PC2, PC3), die durch die Makrobasisstation (10) abgedeckt sind.

5. Verfahren nach Anspruch 4, wobei der Schritt A4 ferner die folgenden Schritte umfasst:
- Übertragen (i) eine Abladeanforderung an alle kleinen Zellen (PC1, PC2, PC3), die durch die Makrobasisstation (10) abgedeckt sind, um von allen kleinen Zellen (PC1, PC2, PC3) anzufordern zu melden, ob sie in der Lage sind, den Verkehr der Makrozelle (MC) abzuladen;
- Empfangen (iii) einer entsprechenden Abladeantwort von zumindest einer kleinen Zelle (PC1, PC2, PC3), wobei die Abladeantwort verwendet wird, um anzuzeigen, dass die entsprechende kleine Zelle (PC1, PC2, PC3) in der Lage ist, den Verkehr der Makrozelle (MC) abzuladen, wobei die Abladeantwort (iii) eine Kennung der kleinen Zelle umfasst, die den Verkehrsinformationsbericht überträgt; und
- Bestimmen, aus den empfangenen Abladeantworten (iii), aller kleinen Zellen (PC1, PC2, PC3), die in der Lage sind, den Verkehr der Makrozelle (MC) abzuladen, unter allen kleinen Zellen (PC1, PC2, PC3), die durch die Makrobasisstation (10) abgedeckt sind.

6. Verfahren nach Anspruch 4, wobei, wenn das Ergebnis der Beurteilung im Schritt A3 ist, dass der Verkehr der Makrozelle (MC) über der ersten Schwelle liegt,
- zwischen den Schritten B und C das Verfahren ferner Folgendes umfasst: Abrufen von Mobilitätsstatusinformationen des Benutzergeräts (20, 30), wobei die Mobilitätsstatusinformationen eine Geschwindigkeit des Benutzergeräts (20, 30) anzeigen; und
- Beurteilen, in Schritt C, ob das Benutzergerät (20, 30) angewiesen werden soll, die periodische Messung durchzuführen, basierend auf einem Ergebnis der Beurteilung im Schritt B und den abgerufenen Mobilitätsstatusinformationen.

7. Verfahren nach Anspruch 6, wobei in Schritt C beurteilt wird, dass das Benutzergerät (20, 30) nicht angewiesen werden soll, die periodische Messung durchzuführen, wenn die Mobilitätsstatusinformationen anzeigen, dass die Geschwindigkeit des Benutzergeräts (20, 30) über einer zweiten Schwelle liegt.

8. Verfahren nach Anspruch 3, wobei, wenn das Ergebnis der Beurteilung im Schritt A1 ist, dass das Benutzergerät (20, 30) am Rand der Makrozelle (MC) befindlich ist,
- das Verfahren ferner Folgendes umfasst: Abrufen von Mobilitätsstatusinformationen des Benutzergeräts (20, 30), wobei die Mobilitätsstatusinformationen eine Geschwindigkeit des Benutzergeräts (20, 30) anzeigen; und
- Bestimmen des Intervalls basierend auf den abgerufenen Dichteinformationen und den Mobilitätsstatusinformationen in Schritt D2.

9. Verfahren nach Anspruch 8, wobei das in Schritt D2 bestimmte Intervall kürzer ist, wenn die Mobilitätsstatusinformationen anzeigen, dass die Geschwindigkeit des Benutzergeräts (20, 30) über einer zweiten Schwelle liegt.

10. Verfahren nach Anspruch 1, das ferner Folgendes umfasst:
E. Empfangen (S150) einer zweiten Signalisierung vom Benutzergerät, wobei die zweite Signalisierung Zellkennungen der kleinen Zellen (PC1, PC2, PC3) umfasst, die durch das Benutzergerät (20, 30) ermittelt wurden; und
F. basierend auf der zweiten Signalisierung, Durchführen eines der folgenden Schritte:
- Vorbereiten (S160) auf eine Übergabe des Benutzergeräts (20, 30) an eine der ermittelten kleinen Zellen (PC1, PC2, PC3); und
- Verwenden von einer oder mehreren der ermittelten kleinen Zellen (PC1, PC2, PC3) als Kandidat für sekundäre Zelle oder Zellen zum Versorgen des Benutzergeräts (20, 30).

11. Verfahren, in einem Benutzergerät (20, 30) eines heterogenen Kommunikationsnetzes, zum Ermitteln kleiner Zellen (PC1, PC2, PC3), wobei das Verfahren die folgenden Schritte umfasst:
a. Empfangen (S210) einer ersten Signalisierung von einer Makrobasisstation (10), wobei die erste Signalisierung verwendet wird, um das Benutzergerät (20, 30) anzuweisen, eine periodische Messung auf einem oder mehreren Kandidaten für kleine Zellen (PC1, PC2, PC3) in einer Zielregion durchzuführen (S220), um kleine Zellen (PC1, PC2, PC3) zu ermitteln, wobei die erste Signalisierung Zellkennungen des einen oder der mehreren Kandidaten für kleine Zellen (PC1, PC2, PC3) in der Zielregion und ein Intervall für die periodische Messung umfasst, das durch die Makrobasisstation basierend auf den abgerufenen Dichteinformationen, die eine Dichte der Kandidaten für kleine Zellen in der Zielregion anzeigen, bestimmt wird;
b. in Reaktion auf die empfangene erste Signalisierung, Durchführen (S220) der periodischen Messung mit dem Intervall zum Ermitteln kleiner Zellen (PC1, PC2, PC3); und
c. Übertragen (S230) einer zweiten Signalisierung an die Makrobasisstation (10), wobei die zweite Signalisierung Zellkennungen der ermittelten kleinen Zellen (PC1, PC2, PC3) umfasst.

12. Einrichtung, in einer Makrobasisstation (10) einer Makrozelle (MC, macro cell) eines heterogenen Kommunikationsnetzes, zum Unterstützen eines Benutzergeräts (20, 30) bei der Ermittelung kleiner Zellen (PC1, PC2, PC3), wobei die Einrichtung Folgendes umfasst:
eine erste Beurteilungseinheit, ausgelegt zum Beurteilen, ob sich das Benutzergerät (20, 30) einer Zielregion angenähert hat, die einen oder mehrere Kandidaten für kleine Zellen (PC1, PC2, PC3) umfasst, basierend auf gespeicherten Ortsreichweiteninformation aller Kandidaten für kleine Zellen in der Makrozelle und geschätzten Positionsinformationen des Benutzergeräts (20, 30);
eine zweite Beurteilungseinheit, ausgelegt zum Beurteilen, basierend auf einem Ergebnis der Beurteilung der ersten Beurteilungseinheit, ob das Benutzergerät (20, 30) angewiesen werden soll, eine periodische Messung auf dem einen oder den mehreren Kandidaten für kleine Zellen (PC1, PC2, PC3) in der Zielregion durchzuführen, um kleine Zellen (PC1, PC2, PC3) zu ermitteln; und
eine erste Abrufeinheit, die dazu ausgelegt ist, wenn ein Ergebnis der Beurteilung der zweiten Beurteilungseinheit ist, das Benutzergerät (20, 30) anzuweisen, die periodische Messung durchzuführen, Dichteinformationen abzurufen, die eine Dichte der Kandidaten für kleine Zellen (PC1, PC2, PC3) in der Zielregion anzeigen;
eine erste Bestimmungseinheit, ausgelegt zum Bestimmen eines Intervalls für die periodische Messung des Benutzergeräts (20, 30) basierend auf den von der ersten Abrufeinheit abgerufenen Dichteinformationen; und
eine erste Übertragungseinheit, ausgelegt zum Übertragen (S143, S210) einer ersten Signalisierung an das Benutzergerät (20, 30), um das Benutzergerät anzuweisen, die periodische Messung durchzuführen, wobei die erste Signalisierung Zellkennungen des einen oder der mehreren Kandidaten für kleine Zellen (PC1, PC2, PC3) in der Zielregion und das bestimmte Intervall umfasst.

13. Einrichtung, in einem Benutzergerät (20, 30) eines heterogenen Kommunikationsnetzes, zum Ermitteln kleiner Zellen (PC1, PC2, PC3), wobei die Einrichtung Folgendes umfasst:
eine erste Empfangseinheit, ausgelegt zum Empfangen (S210) einer ersten Signalisierung von einer Makrobasisstation (10), wobei die erste Signalisierung verwendet wird, um das Benutzergerät (20, 30) anzuweisen, eine periodische Messung auf einem oder mehreren Kandidaten für kleine Zellen (PC1, PC2, PC3) in einer Zielregion durchzuführen, um kleine Zellen (PC1, PC2, PC3) zu ermitteln, wobei die erste Signalisierung Zellkennungen des einen oder der mehreren Kandidaten für kleine Zellen (PC1, PC2, PC3) in der Zielregion und ein Intervall für die periodische Messung umfasst, das durch die Makrobasisstation basierend auf den abgerufenen Dichteinformationen, die eine Dichte der Kandidaten für kleine Zellen in der Zielregion anzeigen, bestimmt wird;
eine erste Messeinheit, ausgelegt zum, in Reaktion auf die empfangene erste Signalisierung, Durchführen (S220) der periodischen Messung bei dem Intervall zum Ermitteln kleiner Zellen; und
eine zweite Übertragungseinheit, ausgelegt zum Übertragen (S230) einer zweiten Signalisierung an die Makrobasisstation (10), wobei die zweite Signalisierung Zellkennungen der ermittelten kleinen Zellen (PC1, PC2, PC3) umfasst.

## Revendications

1. Procédé, dans une macro-station de base (10) d'une macro-cellule (MC) d'un réseau de communication hétérogène, d'assistance d'un équipement utilisateur (20, 30) dans la découverte de petites cellules (PC1, PC2, PC3), le procédé comprenant les étapes de :
B. l'évaluation (S120) que l'équipement utilisateur (20, 30) s'est ou non rapproché d'une région cible qui inclut une ou plusieurs petites cellules candidates (PC1, PC2, PC3) sur la base d'informations de portée de localisation stockées de la totalité des petites cellules candidates (PC1, PC2, PC3) dans la macro-cellule (MC) et d'informations de position estimées de l'équipement utilisateur (20, 30) ;
C. l'évaluation (S130), sur la base d'un résultat de l'évaluation dans l'étape B, qu'il faut ou non donner l'instruction à l'équipement utilisateur (20, 30) de réaliser une mesure périodique sur les une ou plusieurs petites cellules candidates (PC1, PC2, PC3) dans la région cible pour découvrir des petites cellules (PC1, PC2, PC3) ; et
D. lorsqu'un résultat de l'évaluation dans l'étape C est qu'il faut donner l'instruction à l'équipement utilisateur (20, 30) de réaliser la mesure périodique, la réalisation des étapes de :
D1. l'obtention (S141) d'informations de densité qui indiquent une densité des petites cellules candidates (PC1, PC2, PC3) dans la région cible ;
D2. la détermination (S142) d'un intervalle pour la mesure périodique de l'équipement utilisateur (20, 30) sur la base des informations de densité obtenues ; et
D3. la transmission (S143) d'une première signalisation à l'équipement utilisateur (20, 30) pour donner l'instruction à l'équipement utilisateur (20, 30) de réaliser la mesure périodique, dans lequel la première signalisation inclut des identifiants de cellule des une ou plusieurs petites cellules candidates (PC1, PC2, PC3) dans la région cible et l'intervalle déterminé.

2. Procédé selon la revendication 1, dans lequel dans l'étape D2, l'intervalle déterminé est plus court lorsque les informations de densité indiquent que la densité des petites cellules candidates (PC1, PC2, PC3) dans la région cible est plus élevée.

3. Procédé selon la revendication 1, dans lequel, avant l'étape B, le procédé comprend en outre l'étape de :
A1. l'évaluation (S111) que l'équipement utilisateur (20, 30) est ou non localisé à un bord de la macro-cellule (MC) ; et
lorsqu'un résultat de l'évaluation dans l'étape A1 est que l'équipement utilisateur (20, 30) est localisé au bord de la macro-cellule (MC), la réalisation de l'étape de :
A2. la détermination (S112) de la totalité des petites cellules candidates (PC1, PC2, PC3) en tant que totalité des petites cellules couvertes par la macro-station de base (10).

4. Procédé selon la revendication 3, dans lequel, lorsque le résultat de l'évaluation dans l'étape A1 est que l'équipement utilisateur (20, 30) n'est pas localisé au bord de la macro-cellule (MC), la réalisation de l'étape de :
A3. l'évaluation que le trafic de la macro-cellule (MC) est ou non supérieur à un premier seuil ; et
lorsqu'un résultat de l'évaluation dans l'étape A3 est que le trafic de la macro-cellule (MC) est supérieur au premier seuil, la réalisation de l'étape de :
A4. la détermination de la totalité des petites cellules candidates (PC1, PC2, PC3) en tant que totalité des petites cellules (PC1, PC2, PC3) qui sont capables de décharger le trafic de la macro-cellule (MC) parmi la totalité des petites cellules (PC1, PC2, PC3) couvertes par la macro-station de base (10).

5. Procédé selon la revendication 4, dans lequel l'étape A4 comprend en outre les étapes de :
- la transmission (i) d'une demande de déchargement à la totalité des petites cellules (PC1, PC2, PC3) couvertes par la macro-station de base (10) pour demander à la totalité des petites cellules (PC1, PC2, PC3) de rapporter qu'elles sont ou non capables de décharger le trafic de la macro-cellule (MC) ;
- la réception (iii) d'une réponse de déchargement correspondante respectivement à partir d'au moins une petite cellule (PC1, PC2, PC3), la réponse de déchargement étant utilisée pour indiquer que la petite cellule correspondante (PC1, PC2, PC3) est capable de décharger le trafic de la macro-cellule (MC), la réponse de déchargement (iii) incluant un identifiant de la petite cellule transmettant le rapport d'informations de trafic ; et
- la détermination, à partir des réponses de déchargement reçues (iii), de la totalité des petites cellules (PC1, PC2, PC3) qui sont capables de décharger le trafic de la macro-cellule (MC) parmi la totalité des petites cellules (PC1, PC2, PC3) couvertes par la macro-station de base (10).

6. Procédé selon la revendication 4, dans lequel, lorsque le résultat de l'évaluation dans l'étape A3 est que le trafic de la macro-cellule (MC) est supérieur au premier seuil,
- entre les étapes B et C, le procédé comprend en outre : l'obtention d'informations d'état de mobilité de l'équipement utilisateur (20, 30), les informations d'état de mobilité indiquant une vitesse de l'équipement utilisateur (20, 30) ; et
- l'évaluation qu'il faut ou non donner l'instruction à l'équipement utilisateur (20, 30) de réaliser la mesure périodique sur la base d'un résultat de l'évaluation dans l'étape B et des informations d'état de mobilité obtenues dans l'étape C.

7. Procédé selon la revendication 6, dans lequel il est évalué qu'il ne faut pas donner l'instruction à l'équipement utilisateur (20, 30) de réaliser la mesure périodique lorsque les informations d'état de mobilité indiquent que la vitesse de l'équipement utilisateur (20, 30) est supérieure à un second seuil dans l'étape C.

8. Procédé selon la revendication 3, dans lequel lorsque le résultat de l'évaluation dans l'étape A1 est que l'équipement utilisateur (20, 30) est localisé au bord de la macro-cellule (MC),
- le procédé comprend en outre : l'obtention d'informations d'état de mobilité de l'équipement utilisateur (20, 30), les informations d'état de mobilité indiquant une vitesse de l'équipement utilisateur (20, 30) ; et
- la détermination de l'intervalle sur la base des informations de densité obtenues et des informations d'état de mobilité obtenues dans l'étape D2.

9. Procédé selon la revendication 8, dans lequel l'intervalle déterminé est plus court lorsque les informations d'état de mobilité indiquent que la vitesse de l'équipement utilisateur (20, 30) est supérieure dans l'étape D2.

10. Procédé selon la revendication 1, comprenant en outre :
E. la réception (S150) d'une seconde signalisation à partir de l'équipement utilisateur, la seconde signalisation incluant des identifiants de cellule des petites cellules (PC1, PC2, PC3) découvertes par l'équipement utilisateur (20, 30) ; et
F. sur la base de la seconde signalisation, la réalisation d'une des étapes de :
- la préparation (S160) pour un transfert de l'équipement utilisateur (20, 30) à une des petites cellules découvertes (PC1, PC2, PC3) ; et
- l'emploi d'une ou de plusieurs des petites cellules découvertes (PC1, PC2, PC3) en tant que cellule ou cellules secondaires candidates pour servir l'équipement utilisateur (20, 30).

11. Procédé, dans un équipement utilisateur (20, 30) d'un réseau de communication hétérogène, de découverte de petites cellules (PC1, PC2, PC3), le procédé comprenant les étapes de :
a. la réception (S210) d'une première signalisation à partir d'une macro-station de base (10), la première signalisation étant utilisée pour donner l'instruction à l'équipement utilisateur (20, 30) de réaliser (S220) une mesure périodique sur une ou plusieurs petites cellules candidates (PC1, PC2, PC3) dans une région cible pour découvrir des petites cellules (PC1, PC2, PC3), dans lequel la première signalisation inclut des identifiants de cellule des une ou plusieurs petites cellules candidates (PC1, PC2, PC3) dans la région cible et un intervalle pour la mesure périodique déterminée par la macro-station de base sur la base d'informations de densité obtenues qui indiquent une densité des petites cellules candidates dans la région cible ;
b. en réponse à la première signalisation reçue, la réalisation (S220) de la mesure périodique avec l'intervalle pour découvrir des petites cellules (PC1, PC2, PC3) ; et
c. la transmission (S230) d'une seconde signalisation à la macro-station de base (10), la seconde signalisation incluant des identifiants de cellule des petites cellules découvertes (PC1, PC2, PC3).

12. Appareil, dans une macro-station de base (10) d'une macro-cellule (MC) d'un réseau de communication hétérogène, pour assister un équipement utilisateur (20, 30) dans la découverte de petites cellules (PC1, PC2, PC3), l'appareil comprenant :
une première unité d'évaluation configurée pour évaluer que l'équipement utilisateur (20, 30) s'est rapproché ou non d'une région cible qui inclut une ou plusieurs petites cellules candidates (PC1, PC2, PC3) sur la base d'informations de portée de localisation stockées de la totalité des petites cellules candidates dans la macro-cellule et d'informations de position estimées de l'équipement utilisateur (20, 30) ;
une seconde unité d'évaluation configurée pour évaluer, sur la base d'un résultat de l'évaluation de la première unité d'évaluation, qu'il faut ou non donner l'instruction à l'équipement utilisateur (20, 30) de réaliser une mesure périodique sur les une ou plusieurs petites cellules candidates (PC1, PC2, PC3) dans la région cible pour découvrir des petites cellules (PC1, PC2, PC3) ; et
une première unité d'obtention configurée, lorsqu'un résultat de l'évaluation de la seconde unité d'évaluation est qu'il faut donner l'instruction à l'équipement utilisateur (20, 30) de réaliser la mesure périodique, pour obtenir des informations de densité qui indiquent une densité des petites cellules candidates (PC1, PC2, PC3) dans la région cible ;
une première unité de détermination configurée pour déterminer un intervalle pour la mesure périodique de l'équipement utilisateur (20, 30) sur la base des informations de densité obtenues par la première unité d'obtention ; et
une première unité de transmission configurée pour transmettre (S143, S210) une première signalisation à l'équipement utilisateur (20, 30) pour donner l'instruction à l'équipement utilisateur de réaliser la mesure périodique, dans lequel la première signalisation inclut des identifiants de cellule des une ou plusieurs petites cellules candidates (PC1, PC2, PC3) dans la région cible et l'intervalle déterminé.

13. Appareil, dans un équipement utilisateur (20, 30) d'un réseau de communication hétérogène, pour découvrir de petites cellules (PC1, PC2, PC3), l'appareil comprenant :
une première unité de réception configurée pour recevoir (S210) une première signalisation à partir d'une macro-station de base (10), la première signalisation étant utilisée pour donner l'instruction à l'équipement utilisateur (20, 30) de réaliser une mesure périodique sur une ou plusieurs petites cellules candidates (PC1, PC2, PC3) dans une région cible pour découvrir de petites cellules (PC1, PC2, PC3), dans lequel la première signalisation inclut des identifiants de cellule des une ou plusieurs petites cellules candidates (PC1, PC2, PC3) dans la région cible et un intervalle pour la mesure périodique déterminée par la macro-station de base sur la base d'informations de densité obtenues qui indiquent une densité des petites cellules candidates dans la région cible ;
une première unité de mesure configurée, en réponse à la première signalisation reçue, pour réaliser (S220) la mesure périodique à l'intervalle pour découvrir de petites cellules ; et
une seconde unité de transmission configurée pour transmettre (S230) une seconde signalisation à la macro-station de base (10), la seconde signalisation incluant des identifiants de cellule des petites cellules découvertes (PC1, PC2, PC3).
